# NEUE EUROPÄISCHE PATENTSCHRIFT

(11) **EP 0 268 013 B2**
(45) Veröffentlichungstag und Bekanntmachung des Hinweises auf die Entscheidung über den Einspruch: **02.01.1997**
(45) Hinweis auf die Patenterteilung: 02.10.1991
(21) Anmeldenummer: 87108088.3
(22) Anmeldetag: 04.06.1987
(51) Int. Cl.: F04D 13/06, F04D 13/02, F04D 15/02

(54) **Pumpe mit Spaltrohr**
Canned motor pump or pump with an encased magnetic coupling
Pompe avec moteur électrique à rotor noyé ou avec accouplement magnétique

(30) Priorität: 20.11.1986 DE 3639720
(43) Veröffentlichungstag der Anmeldung: 25.05.1988
(73) Patentinhaber: Reinecker, Heyko, D-79104 Freiburg (DE)
(72) Erfinder: Kraemer, Roland, Dr., D-7803 Gundelfingen (DE); Neumaier, Robert, D-7804 Glottertal (DE)
(74) Vertreter: Schmitt, Hans, Dipl.-Ing.

(56) Entgegenhaltungen:
- DE-A- 3 337 086
- DE-A- 3 636 404
- DE-U- 8 208 046
- SU-A- 684 679
- SOVIET INVENTIONS ILLUSTRATED, Woche C19, 18. Juni 1980, Sektion Q, Zusammenfassung Nr. 34022, Derwent Publications Ltd, London, GB, & SU-A-684679 (FEDOROV) 08-09-1979

## Beschreibung

Die Erfindung bezieht sich auf eine Pumpe gemäß dem Oberbegriff von Anspruch 1.

Man kennt bereits Pumpen mit einem Spaltrohrmagnetantrieb, die einen äußeren Antriebsteil und einen damit magnetisch gekoppelten Drehteil aufweisen, wobei äußeres Antriebs- und inneres Drehteil mittels eines Spaltrohres hermetisch voneinander getrennt ist (vgl. DE-U-82 08 046). Mit Hilfe des Spaltrohres können bei solchen Pumpen die äußeren Antriebsteile hermetisch gegenüber dem Fördermedium enthaltenden Pumpenbereich abgetrennt werden, weshalb sich solche Pumpen insbesondere zum Fördern von aggresiven oder aus anderen Gründen gefährlichen Medien eignen. Derartige in der Praxis bewährte Pumpen weisen jedoch noch einige Nachteile auf. Auch bei guten Ausführungen solcher Pumpen sind in der Praxis Havariefälle nicht völlig vermeidbar. Typische Havariefälle sind z.B. Beschädigungen an Lagern des inneren Drehteils, Korrosionserscheinungen im Bereich des Spaltrohres durch die Förderung chemisch aggresiver Flüssigkeit, Verunreinigungen des Fördermediums, zum Beispiel durch Feststoffpartikel, die das Spaltrohr auf die Dauer durchschleißen. Auch kann eine exakte Lagerung einer Antriebswelle schlechter werden, was ebenfalls nicht selten zur Undichtigkeit des Spaltrohres führt. Aus den vorerwähnten Gründen ist das Spaltrohr, welches in der Regel zwecks Minimierung von magnetischen Verlusten möglichst dünnwandig ausgebildet wird, ein gefährdetes Teil solcher Pumpen und der Austritt von Förderflüssigkeit aufgrund einer Beschädigung des Spaltrohres kann zu großen Folgeschäden führen, zum Beispiel zu Gesundheitsschäden beim Bedienungspersonal, zur Umweltbelastung und/oder Zerstörung weiterer Teile der Pumpe oder einer dazu benachbarten Anlage. Zwar weist die vorerwähnte Pumpe gemäß DE-U-82 08 046 auch schon Havariedichtungen und Abschaltelemente auf, die im Havariefall die Pumpe stillsetzen. Dadurch erreicht man jedoch nur einen kurzfristigen und vor allem einen unvollkommenen Schutz, da diese Havariedichtungen aus dynamischen Dichtungen bestehen.

Zur Vermeidung solcher Nachteile hat man auch bereits eine Pumpe der eingangs erwähnten Art geschaffen, die als Antrieb einen Spaltrohrmotor aufweist, dessen Spaltrohr über einen pumpennahen axialen Abschnitt doppelwandig ist (vgl. "Soviet Inventions Illustrated", Woche C19 18.6. 1980, Section Q, Zusammenfassung 34022). Bei dieser vorbekannten Spaltrohrmotorpumpe ist im Wandungsinnenraum des doppelwandigen Spaltrohrabschnittes ein neutrales Anzeigemedium vorgesehen, das bei Beschädigung des entsprechenden Abschnittes des Spaltrohres geräteaußenseitig ein Druckanzeigegerät betätigt. Derartige Spaltrohrmotorpumpen haben jedoch noch Nachteile. Wenn zum Beispiel Beschädigungen des dort praktisch nur axial verlaufenden Spaltrohres in dessen pumpenfernen Teil auftreten, ist eine rechtzeitige Havarieanzeige nicht gewährleistet. Auch kann man mit der dort gezeigten Ausbildung der Havarieanzeige Schäden in der Nähe oder am Boden eines Spaltrohrtopfes, wie man ihn gewöhnlich in Spaltrohr-Magnetkupplungspumpen verwendet, nicht erfassen. In manchen Fällen werden jedoch mit Spaltrohr-Magnetkupplung angetriebene Pumpen gegenüber Spaltrohrmotoren bevorzugt, zum Beispiel wegen einer leichteren, unabhängigen Austauschbarkeit des Elektromotores.

Es besteht daher die Aufgabe, eine Pumpe der eingangs erwähnten Art zu schaffen, bei der das innere Antriebsteil und die Fördermedium führenden Pumpenteile zum einen hermetisch mittels eines Spaltrohrtopfes abzutrennen sind, bei der aber zum anderen auch eine Beschädigung des Spaltrohrtopfes im Bereich von dessen pumpenfernen axialem und dessen Topfboden schnell und sicher angezeigt werden kann.

Die erfindungsgemäße Lösung besteht bei einer Pumpe der eingangs erwähnten Art in den Merkmalen des Kennzeichnungsteils von Anspruch 1.

Bei einer solchen Ausbildung der Pumpe bleibt bei einer Beschädigung des Spaltrohrtopfes am Topfboden oder in dessen Nachbarschaft die hermetische Dichtigkeit der Pumpe weiterhin erhalten, während gleichzeitig diese Beschädigung der Geräte außenseitig angezeigt wird. Eine derartig beschädigte, jedoch noch hermetisch abgedichtete Pumpe kann frühzeitig außer Betrieb gesetzt und bedarfsweise repariert werden. Dabei ist zu beachten, daß bei Spaltrohrmagnetpumpen sich nicht selten der Spaltrohrtopfboden in unmittelbarer Nähe eines Flansches des sich drehenden Antriebsteils liegt. Hier auftretende Berührungen oder Reibungen durch Verunreinigungen, die z.B. zu einem periodischen Verkanten des Spaltrohrtopfes und damit langfristig zu einer Schädigung der Innenlager im Spaltrohrtopf führen können, sind frühzeitig zu erfassen. Geräteaußenseitig meßbare Druckschwankungen können somit Aufschluß geben über mögliche Beschädigungen einer Spaltrohrwand und/oder Beschädigung im Bereich des Spaltrohrtopfbodens.

Dabei bietet die Verwendung von flüssigen oder gasförmigen Anzeigemedien in Verbindung mit dem engen Abstand der Rohrwände die Vorteile einer geringen Gesamtwandstärke der Rohrwände mit einer einfachen hydraulichen oder pneumatischen Anzeige. Eine Signalfolie bietet den Vorteil einer einfachen elektrischen Fernanzeige. Außerdem hat der enge, berührungsnahe Abstand der beiden gegenüberliegenden Rohrwandflächen zusätzlich den Vorteil, daß eine gute Wärmeübertragung zum Beispiel von der äußeren axialen Rohrwand zur inneren Rohrwand und damit auf den abgezweigten Strom des Fördermediums der Pumpe begünstigt wird. Die innere axiale Rohrwand des Spaltrohres und wenigstens erhebliche Flächenanteile der Topfbodenplatte des Spaltrohrtopfes sind bekanntlich in aller Regel vom abgezweigten Teilstrom vom Fördermedium beaufschlagt, so daß die vorerwähnte Wärmeübertragung von der äußeren axialen Rohrwand auf die benachbarte innere axiale Rohrwand sowie von der Topfbodenaußenwand auf die Topfbodenplatte den Vorteil hat, daß in der äußeren Rohrwand wirbelstrombedingt erzeugte Wärme besser abtransportiert werden kann.

Während die Verwendung zum Beispiel eines Gases als Anzeigemedium u.a. den Vorteil einer einfachen Herstellbarkeit der Pumpe hat, hat die Verwendung einer Signalfolie als Anzeigemedium den Vorteil, daß die Rohrwände unter Einklemmung der Folie fest aufeinanderliegend angebracht sein können, wodurch die Stabilität des gesamten Spaltrohrtopfes erhöht wird.

Weiterbildungen der Erfindung sind in den Unteransprüchen aufgeführt. Dabei ergeben die Merkmale von Anspruch 2, 3 und 4 die Vorteile einer vergleichsweisen formstabilen Ausbildung des Spaltrohrtopfes.

Eng aneinanderliegende Wände des Spaltrohres halten die Übertragungsverluste zwischen dem äußeren Antriebsteil und dem magnetischen gekoppelten inneren Drehteil klein. Durch den sehr engen Abstand der Wandungsinnenräume zueinander und die Verwendung eines Gases oder einer Flüssigkeit als Anzeigemedien werden die Kriterien des Kleinhaltens von magnetischen Übertragungsverlusten einerseits und des alsbaldigen, einfachen Anzeigens einer Beschädigung optimiert.

Eine abschnittweise Flächenberührung gemäß Anspuch 5 zwischen in vorerwähnten Teilen des Spaltrohrtopfes, namentlich der axialen Rohrwände begünstigt dabei zum einen noch die Wärmeübertragung, zum anderen führt dies zu einer Stabilisierung des Spaltrohrtopfes. Gemäß den Merkmalen nach Anspruch 4 erhält man auch dann eine Havarieanzeige, wenn das Anzeigemedium nach außen entweichen kann, wenn also als erstes die äußere axiale Rohrwand und/oder die Topfbodenaußenwand beschädigt sind, was dann in aller Regel zu einem Druckabfall innerhalb der Wandungsinnenräume führt, wenn zum Beispiel außerhalb des Spaltrohrtopfes praktisch normaler Atmosphärendruck herrscht. Ein angezeigter Druckanstieg zeigt bei dieser Anordnung dagegen eine Beschädigung an wenigstens einer der Innenwände des Spaltrohrtopfes an, sofern - was gewöhnlich der Fall ist - die Förderflüssigkeit unter höherem Druck steht als das Anzeigemedium in den Wandungsinnenräumen.

Die Merkmale des Anspruches 5 geben auch eine bevorzugte Ausführungsform für den Spaltrohrtopf nach Anspruch 3 an, bei der abschnittsweise Flächenberührung an den Innenwänden erreicht wird. Man kann auch eine Flüssigkeitkeit als Anzeigemedium in den Wandungsinnenräumen verwenden, wobei man gewöhnlich einen etwas größeren lichten Abstand zwischen den bei den Rohrinnenwänden und beim Topfboden-Wandungsinnenraum benötigt.

Dies ist vor allem dann vorteilhaft, wenn man als Anzeigemedium Förderflüssigkeit wählt. Bei Beschädigungen der inneren axialen Rohrwand oder der dem Innenraum des Spaltrohrtopfes benachbarten Topfbodenplatte wird dann das eigentliche Fördermedium nicht durch ein anderes Anzeigemedium verunreinigt (vgl. auch Anspruch 7). Gegebenenfalls nimmt man dann einen zwar immer noch kleinen, aber zum Beispiel gegenüber einem gasförmigen Anzeigemedium etwas größeren lichten Abstand zwischen den Rohrwänden in Kauf, was eine geringe Vergrößerung der magnetischen Übertragungsverluste im Bereich der axialen Rohrwände nach sich ziehen kann, wobei jedoch das Vermeiden von Verunreinigungen des eigentlichen Fördermediums wesentlich wichtiger und vorteilhafter ist als geringfügige Vergrößerung der magnetischen Übertragungsverluste. Die Merkmale nach Anspruch 5 mit den jeweils der Innenseite einer Rohrwand vorstehenden Noppen hat in Zusammenwirken mit flüssigen Anzeigemedien noch den Vorteil, daß eine an einer Stelle des Spaltrohrtopfes durch Undichtigkeit aufgetretene Druckminderung sich sehr schnell bis zum geräteaußenseitigen Anzeigegerät fortsetzt, also eine schnelle Havariemeldung erfolgt. Die vorstehend bereits angesprochenen Vorteile bei Verwendung eines Gases als Anzeigemedium werden noch durch folgende Vorteile ergänzt: Gas spricht auf die bei Inbetriebnahme der Pumpe in der Regel nicht zu vermeidende Temperaturveränderungen, insbesondere auf gewöhnlich eintretende Temperaturerhöhungen, nicht so stark an wie zum Beispiel eine Flüssigkeit. Dadurch wird eine Druckmessung,die den Gut- oder Schlechtzustand des Spaltrohrtopfes anzeigt, erleichtert. Die Verwendung eines chemisch neutralen Gases ist dabei besonders vorteilhaft.

Die Merkmale des 6. Anspruches begünstigen, bei den axialen Rohrwänden mit einer insgesamt geringen Wandstärke auszukommen, wenn die Wandstärke der äußeren axialen Rohrwand auf die Druckverhältnisse beim Pumpenbetrieb abgestimmt ist.

Merkmale des 8. Anspruches ermöglichen, u.a., daß die mit der äußeren axialen Rohrwand zusammenhängenden Teile des doppelwandigen Spaltrohrtopfes separat lösbar sind. Ebenso können nach dem Entfernen der mit der äußeren Rohrwand zusammenhängenden Spaltrohrtopf-Teile die mit der inneren Rohrwand zusammenhängenden Teile jeweils bedarfsweise getrennt erneuert bzw. ausgetauscht werden.

Durch die Maßnahme des 9. Anspruches wird die Abfuhr der wirbelstrombedingten Wärme von der Spaltrohrtopfaußenwand an die Spaltrohrtopfinnenwand begünstigt.

Weitere Merkmale der Erfindung ergeben sich aus der folgenden Beschreibung von Ausführungsbeispielen der Erfindung in Verbindung mit den Ansprüchen und der Zeichnungen. Die einzelnen Merkmalen können je für sich oder zu mehreren bei einer Ausführungsform der Erfindung verwirklicht sein. Es zeigen in unterschiedlichen Maßstäben und zum Teil schematisiert:
- Fig. 1: eine teilweise im Schnitt dargestellte, schematisierte Seitenansicht einer Spaltrohrmagnetpumpe bei teilweise weggelassenem Pumpengehäuse,
- Fig. 2: stark schematisiert einen Teillängsschnitt eines Spaltrohrtopfes einer Spaltrohrmagnetpumpe mit doppeltem Topfboden, ähnlich dem Spaltrohrtopf bei Fig. 1,
- Fig. 3: einen gegenüber der Fig. 2 etwas abgewandelten Spaltrohrtopf-Ausschnitt in einer im Schnitt gehaltenen Teil-Seitenansicht,
- Fig. 4: eine Flüssigkeitsring-Gaspumpe in stark verkleinertem Maßstab, die mit einem stark schematisiert dargestellten doppelwandigen Spaltrohrmagnetkupplungsantrieb ausgerüstet ist,
- Fig. 5: eine teilweise im Schnitt dargestellte Seitenansicht einer Spaltrohrmagnetpumpe bei teilweise weggelassenem Pumpengehäuse in einer gegenüber Fig. 1 etwas abgewandelten Ausführungsform,
- Fig. 6: eine Einzelheit D aus Fig. 5 im vergrößertem Maßstab,

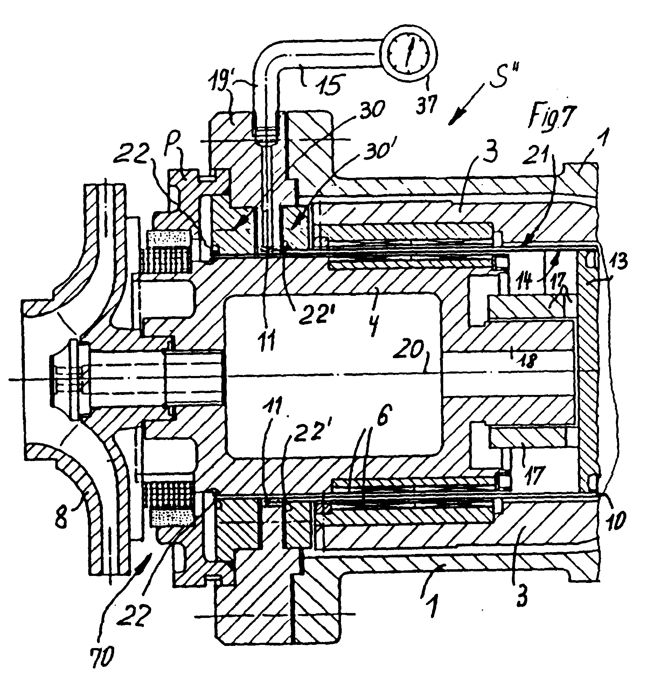

- Fig. 7: eine teilweise im Schnitt dargestellte Seitenansicht einer Spaltrohrmagnetpumpe ähnlich Fig. 1 in einer weiteren abgewandelten Ausführungsform,
- Fig. 8: eine teilweise im Schnitt dargestellte Seitenansicht eines doppelwandigen Spaltrohres und
- Fig. 9: einen Teil-Längsschnitt durch ein gegenüber Fig. 8 abgewandeltes, abschnittweise dargestelltes Spaltrohr.

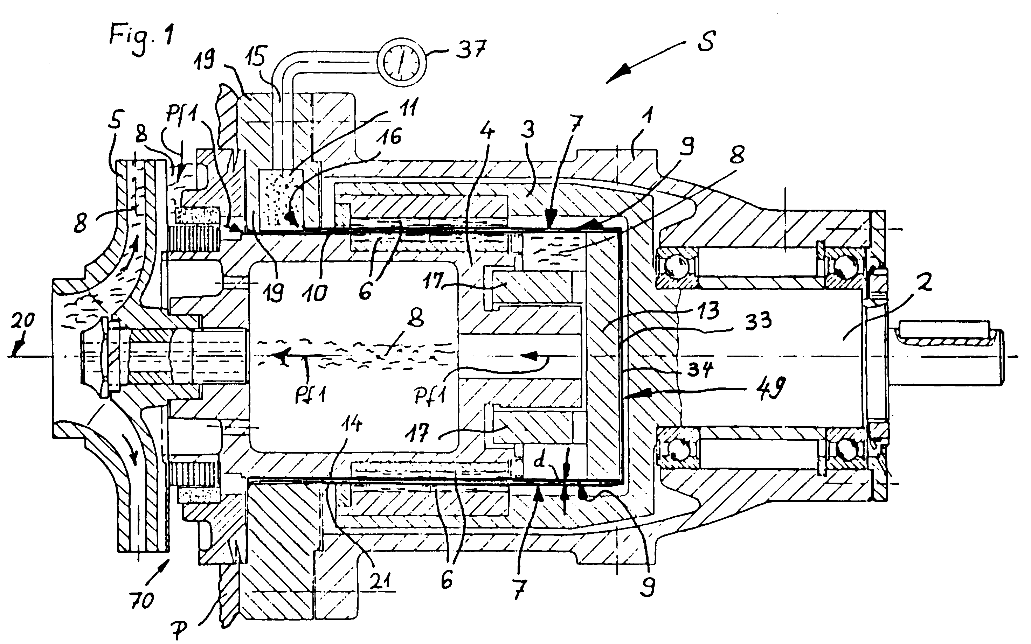

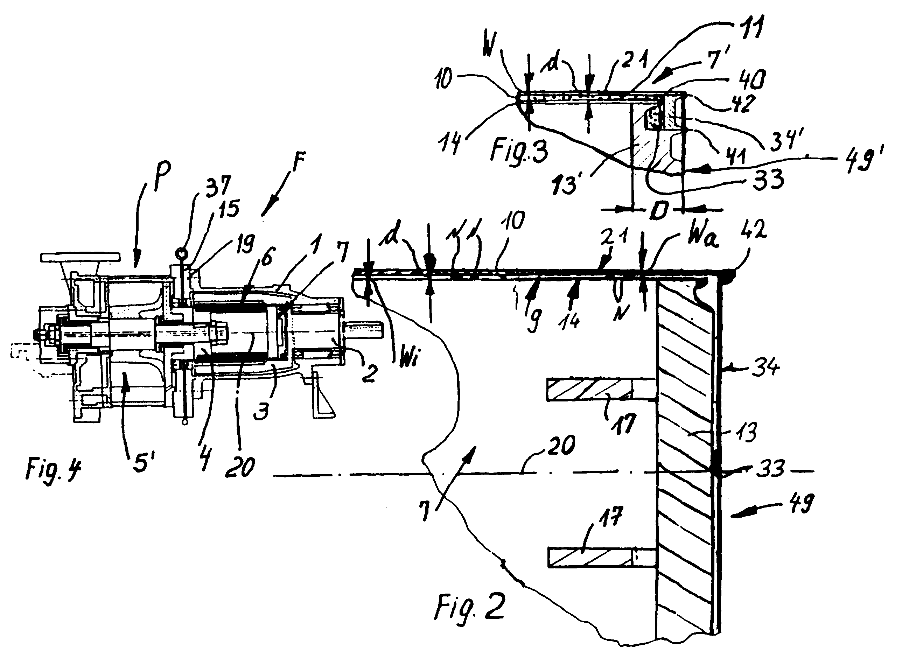

Aus Fig. 1 ist der Grundaufbau einer Spaltrohrmagnetpumpe S erkennbar. In einem Verbindungsgehäuse 1 befinden sich eine Antriebswelle 2 und ein mit ihr verbundenes äußeres Antriebsteil 3. Dieses umschließt topfartig und konzentrisch ein inneres Drehteil 4, das mit einem Pumpenlaufrad 5 in Verbindung steht. Das Antriebsteil 3 und das innere Drehteil 4 sind über Magnete 6 magnetisch gekuppelt, so daß eine Drehbewegung des Antriebsteils 3 auf das innere Drehteil 4 übertragen wird, welches das Pumpenlaufrad 5 antreibt. Zwischen dem äußeren Antriebsteil 3 und dem inneren Drehteil 4 befindet sich ein Spaltrohrtopf 7, der pumpenseitig dicht am Pumpengehäuse P befestigt ist. Dieser Spaltrohrtopf 7 bildet einen hermetischen Abschluß des Pumpenantriebs gegenüber dem Pumpeninnenraum 70 und dem Fördermedium 8, welches dem inneren Teil des Spaltrohrtopfes 7 in Richtung der Pfeile Pf1 zur Kühlung und Schmierung des inneren Drehteils 4 in bekannter Weise in einem Nebenstrom zum Hauptförderstrom durchfließt. Es gehört nun mit zur Erfindung, daß das innere Drehteil 4 vom äußeren Antriebsteil 3 mittels eines wenigstens einen axialen Wandungsinnenraum 10 aufweisenden Spaltrohrtopfes 7 getrennt ist, dessen Boden 49 mindestens abschnittweise doppelwandig (13, 34) ist und dessen Topfboden-Wandungsinnenraum 33 mit dem Wandungsinnenraum 10 des axialen Spaltrohrteiles 9 des Spaltrohrtopfes 7 in Anzeigeverbindung steht (vgl. insbesondere Fig. 2, 3 und 8). Dabei sind hier der von einer Topfbodenplatte 13 sowie einer Topfbodenaußenwand 34 umschlossene Topfboden-Wandungsinnenraum 33 und der damit verbundene von einer äußeren axialen Rohrwand 14 sowie einer inneren axialen Rohrwand 21 des Spaltrohrtopfes 7 umschlossene axiale Wandungsinnenraum 10 mit einem Medium 11 gefüllt, z.B. das in Fig. 1, 3 und 8 durch Punkte angedeutet ist, oder es ist dort eine nachstehend noch näher beschriebene Einrichtung (Signalfolie 12 - vgl. Fig. 9) vorgesehen, mittels der Wandundichtigkeiten geräteaußenseitig anzeigbar sind. Die axialen Rohrwände 14 und 21 sind konzentrisch zur Drehachse 20 des inneren Drehteils 4 und des Pumpenlaufrades 5 angeordnet. In den Ausführungsbeispielen nach Fig. 1 und 3 weisen die axialen Rohrwände 14 und 21 gleiche Wandstärken von etwa 0,5 mm auf und liegen dabei in einem sehr kleinen Abstand d (Fig. 3) aneinander. Dabei ist dieser Abstand d so bemessen, daß er hier gerade noch zum Beispiel gas- oder flüssigkeitsdurchlässig ist. In den Wandungsinnenräumen 10 und 33 befindet sich im Ausführungsbeispiel nach Fig. 1 bis 3 als Anzeigemedium Gas, das dort u.a. in einem Anschlußflansch 19 durch Punkte 11 angedeutet ist. Es hat einen etwas über dem Umgebungsdruck liegenden Gasdruck und kann über einen Druckanschluß 15 (Fig. 1) in die Wandungsinnenräume 10 und 33 eingeleitet werden. Am Druckanschluß 15 ist ein Druckmeßinstrument 37 angeschlossen. Im Ausführungsbeispiel nach Fig. 1 verläuft der Druckanschluß 15 durch den erwähnten Anschlußflansch 19, der die zur Drehachse 20 konzentrisch angeordneten Rohrwände 14 und 21 pumpenseitig umschließt und den Spaltrohrtopf mit dem Pumpengehäuse P verbindet. Im Bereich des Druckanschlusses 15 umschließt der Spaltrohrtopf 7 mit seiner der äußeren axialen Rohrwand 21 eine Öffnung 16, durch die das Gas oder ein anderes Anzeigemedium 11 in die Wandungsinnenräume 10 und 33 eintreten kann. Bei der gegenüber Fig. 1 detaillierteren Teildarstellung des Spaltrohrtopfbodens 49 gemäß Fig. 2 erkennt man gut, daß dieser sich im wesentlichen aus der Topfbodenplatte 13 sowie der Topfbodenaußenwand 34 zusammensetzt und diese Topfbodenplatte 13 sowie die Topfbodenaußenwand 34 gemeinsam den Topfboden-Wandungsinnenraum 33 bilden, der mit dem axialen SpaltrohrWandungsinnenraum 10 des axialen Bereiches 9 des Spaltrohrtopfes in Verbindung steht. Dazu sind die beiden axialen Rohrwände 14 und 21 des Spaltrohrtopfes 7 jeweils an der Topfbodenplatte 13 und der Topfbodenaußenwand 34 getrennt verschweißt (Fig. 2). Die Topfbodenaußenwand 34 ist hierbei biegesteif ausgeführt, damit die Schweißstelle 42 nicht durch die bei einer Biegung der Topfbodenaußenwand 34 auftretenden Hebel-Kräfte zu stark belastet wird.

Fig. 2 und Fig. 3 zeigen noch Abwandlungen der vorbeschriebenen Ausführung. Um die Stabilität des Spaltrohrtopfes 7 und die Wärmeübertragung der äußeren axialen Rohrwand 21 zur axialen Rohrinnenwand 14 zu verbessern, können die einander gegenüberliegenden Innenflächen dieser Rohrwände 14 und 21 mit kleinen Noppen N oder Vorsprüngen versehen sein, welche die jeweils gegenüberliegende Innenfläche beaufschlagen. Hierdurch werden die axialen Rohrwände 14 und 21 einerseits gegeneinander abgestützt, andererseits werden dadurch Wärmeleitkontakte hergestellt (vgl. Fig. 2).
In Fig. 3 erkennt man noch eine gegenüber Fig. 2 etwas abgewandelte Ausführungsform des Spaltrohrtopfes 7' einer Spaltrohrmagnetpumpe S. Dort ist die Topfbodenaußenwand 34' ringförmig gestaltet und die dortige Topfbodenplatte 13' ist in ihrem zentralen Bereich mit größerer Dicke D ausgebildet. Die innere axiale Rohrwand 14 ist mittels einer Schweißnaht 40 mit einer üblichen, am Rand der Topfbodenwand 13' befindlichen Schweißlippe dicht verbunden. Die ringförmige Topfbodenaußenwand 34' hat eine innere und äußere Schweißlippe 41 und 42. Letztere verbindet die ringförmige Topfbodenaußenwand 34' mit der äußeren Rohrwand 21 gasdicht, während die Schweißnaht 41 zwei benachbarte Schweißlippen von der ringförmigen Topfbodenaußenwand 34' und der Topfbodenplatte 13' miteinander verbindet. Bei dieser Ausführung ist die Topfbodenaußenwand 34' besonders biegesteif und einfach in der Herstellung; der gesamte auf diese Weise gebildete Spaltrohrtopf 7' und insbesondere seine Schweißnähte 40, 41 und 42 sind besonders störunanfällig.

Mit dem Druckmeß-Instrument 37 wird der Druck des im Spaltrohr-Wandungsinnenraum10 und im Topfboden-Wandungsinnenraum 33 befindlichen Mediums, das sowohl ein Gas als auch eine Flüssigkeit sein kann, im normalen Betriebszustand der Pumpe gemessen und festgehalten. Ergibt sich eine Beschädigung an den axialen Rohrwänden 14 oder 21 oder 13 oder 34, führt dies in praktisch allen Fällen zu einer Undichtigkeit entweder bei den inneren Wänden 13 oder 14 oder bei den äußeren Wänden 21 oder 34. Die Gas- oder Flüssigkeitsfüllung in den vorerwähnten Wandungsinnenräumen 10 und 33 kann entweichen und es kommt zu einer veränderten Druckanzeige im Druckmeßinstrument 37. In praktisch allen Fällen entsteht eine solche Undichtigkeit zunächst entweder bei den vorerwähnten inneren Wänden 13 und 14 oder den äußeren Wänden 21 und 34. Die jeweils verbleibenden Wände, zum Beispiel die äußere axiale Rohrwand 21 und die Topfbodenaußenwand 34 halten dann für sich alleine eine hermetische Abdichtung der Pumpe S aufrecht, zum Beispiel, bis die Pumpe S außer Betrieb gesetzt ist und gegebenenfalls eine Reparatur durchgeführt wird.
Analoges gilt, wenn zum Beispiel die äußere axiale Rohrwand 21 oder die Topfbodenaußenwand 34 zuerst beschädigt werden; dann hält die Topfbodenplatte 13 zusammen mit der axialen inneren Rohrwand 14 des Spaltrohrtopfes 7 die hermetische Abdichtung der Pumpe S aufrecht.
Dient ein Gas als Anzeigemedium 11, können insbesondere die axialen Rohrwände 14 und 21 so dicht beieinander angeordnet werden, daß eine solche doppelte Rohrwand 14, 21 kaum dicker ist als ein einwandiges Spaltrohr von bisher bereits bekannten Spaltrohrtöpfen.

Aus Figur 2 erkennt man auch eine Ausführungsform, bei der die Wandstärke Wₐ der äußeren Rohrwand 21 dicker als die benachbarte Innenrohrwand Wᵢ ausgebildet ist. Dort ist nämlich die Wandstärke Wₐ auf die Druckverhältnisse beim Pumpenbetrieb abgestimmt und entsprechend stabil ausgelegt, während die axiale innere Rohrwand 14 mit einer dazu wesentlich geringeren Wandstärke Wᵢ versehen und elastisch dehnbar ausgebildet ist. Bei beschädigter äußerer Rohrwand 21 kann sich die innere Rohrwand 14 abstützend an die äußere Rohrwand 21 anlegen und dadurch bleibt der hermetische Abschluß des Pumpeninnenraumes 70 und der mit Förderflüssigkeit durchflossenen Pumpenräume erhalten. Wird die innere Rohrwand 14 zuerst beschädigt, kommt es zu einer Meldung und gegebenenfalls zu einem Stillsetzen der Pumpen, zum Beispiel durch eine Druckerhöhung in den Wandungsinnenräumen 10 und 33 und eine Meldung eines solchen Havariefalles, beispielsweise beim Druckmeßinstrument 37. Bei einer solchen Ausbildung kommt man mit einer verhältnismäßig geringen Gesamtwandstärke Wₐ + Wᵢ bei beiden benachbarten axialen Rohrwänden 14 und 21 des Spaltrohrtopfes 7 aus.

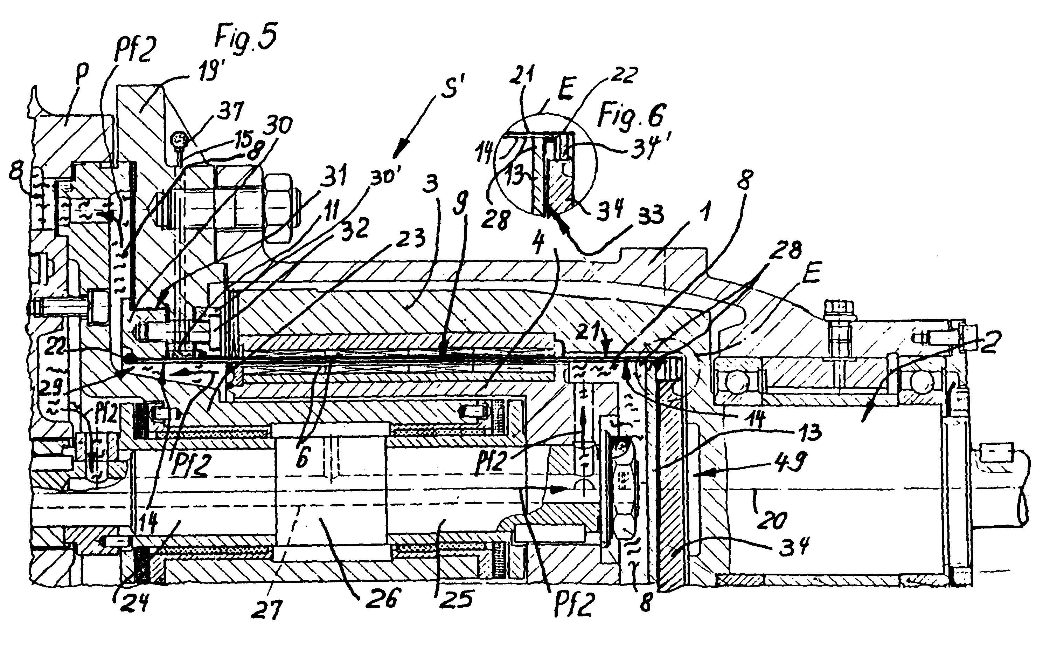

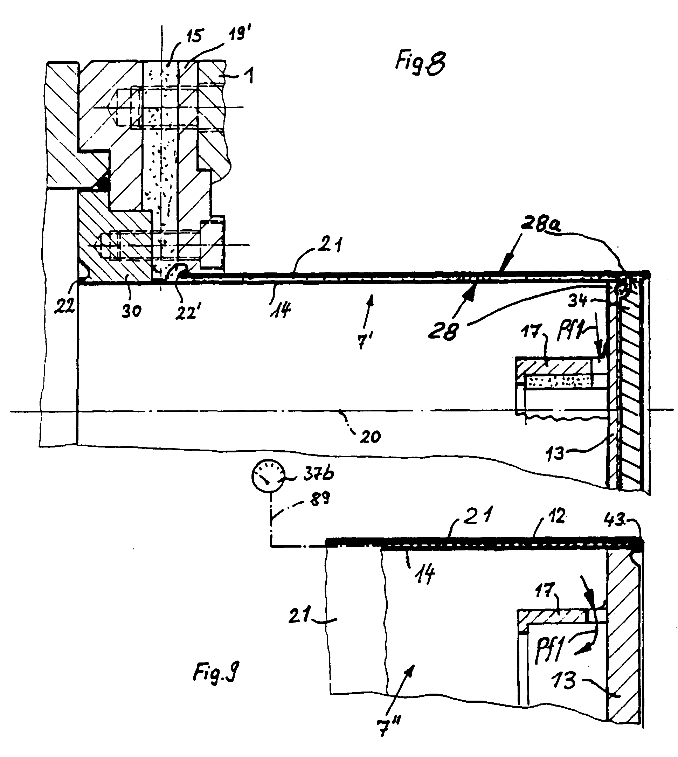

In Figur 5 ist eine gegenüber Fig. 1 etwas abgewandelte Pumpe S' mit Spaltrohrmagnetkupplungsantrieb mit inneren Gleitlagern 24 und 25 dargestellt, in denen die Antriebswelle 26 lagert. Diese verbindet das innere Drehteil 4 der Magnetkupplung drehfest mit einem Pumpenlaufrad 8 ähnlich dem aus Fig. 1. Am inneren Drehteil 4 und am äußeren Antriebsteil 3, von denen in Fig. 5 die unteren Bereiche nicht dargestellt sind, befinden sich analog Fig. 1 die Magnete 6. Die Antriebswelle 26 weist eine zentrale Wellenbohrung 27 auf, durch die in bekannter Weise ein abgezweigter Teilstrom entsprechend dem Pfeil Pf2 durch den Spaltrohrtopf 7 geführt wird. Dabei zeichnet sich die Ausführung nach Fig. 5 und 6 dadurch aus, daß die innere axiale Rohrwand 14 zusammen mit der dazu benachbarten Topfbodenplatte 13 ausbaubar ist, ohne daß dazu zum Beispiel eine Schweißnaht (vgl. die Schweißnähte 40 bis 42 in Fig. 3) zerstört zu werden braucht. Dementsprechend kann die innere axiale Rohrwand 14, die zusammen mit ihrer Topfbodenplatte 13 gewissermaßen einen separaten inneren Spaltrohrtopf 28 bildet, bei Bedarf, zum Beispiel bei Beschädigung, ohne komplizierte Maßnahmen gegen einen neuen inneren Spaltrohrtopf 28 ausgetauscht werden (vgl. Fig. 5 und 8). Dazu ist das pumpenseitige Ende 29 der inneren Spaltrohrwand 14 mit einem Befestigungsflansch 30 versehen, der in einer entsprechend Aussparung 31 des Anschlußflansches 19' mittels Schrauben 32 dicht, jedoch lösbar befestigt ist. Am Ausschnitt E von Fig. 5, der vergrößert in Fig. 6 dargestellt ist, erkennt man noch gut, daß die Topfbodenplatte 13 des inneren Spaltrohrtopfes 28, ähnlich wie bei der Ausführung nach Fig. 2, vollständig von der Topfbodenaußenwand 34 getrennt ist. Die innere Rohrwand 14 ist an ihrem pumpenseitigen Ende 29 mittels einer ringförmigen Schweißnaht 22 mit dem Befestigungsflansch verbunden. Die axiale äußere Rohrwand 21 des Spaltrohrtopfes 7 ist an ihrem pumpenferne Ende in der bereits bei Figur 3 beschriebenen und in Figur 6 gezeigten Weise mit einer kreisringförmigen Topfbodenwand 34' versehen, die von der äußeren Rohrwand 21 radial nach innen nur eine geringfügige Erstreckung hat. Die Ausführung nach Figur 3 unterscheidet sich insoweit von der Ausführung nach Figur 6, als dementsprechend der Boden 49' des Spaltrohrtopfes 7' gemäß Ausführung nach Fig. 3 nur abschnittweise doppelwandig ist, wie gut aus den Teilen 13' und 34' in Fig. 3 hervorgeht.
In Fig. 5 erkennt man noch gut einen Befestigungsflansch 30', der pumpenseitig mit der äußeren Rohrwand 21 verschweißt ist und mit Hilfe von Schrauben 32 am Anschlußflansch 19' befestigt ist. Dementsprechend kann bei einer Ausführung ähnlich Fig. 5 und 6, bei der der Spaltrohrtopfboden 49 aus getrennten Teilen ausgebildet ist, auch die äußere axiale Rohrwand 21 mit den damit fest verbundenen Teilen 34 und 19' (vgl. auch Figur 8) separat vom inneren Spaltrohrtopf 28 ausgebaut und gegebenenfalls ausgetauscht und erneuert werden. In Fig. 8 ist der Deutlichkeit wegen in vergrößertem Maßstab noch ein doppelwandiger Spaltrohrtopf 7' dargestellt, dessen innere Rohrwand 14 über eine Schweißnaht 22 mit einem Befestigungflansch 30 in Verbindung steht und der am pumpenseitigen Ende eine separate Topfbodenplatte 13 aufweist. Bei dieser Ausführung ist die axiale äußere Rohrwand 21 des Spaltrohrtopfes 7' über eine Schweißnaht 22' mit dem Anschlußflansch 19' verbunden; sie wei st an ihrem pumpenfernen Ende eine separate Topfbodenaußenwand 34 auf. Die beiden Rohrwände 21 und 14 mit den zugehörigen inneren und äußeren Spaltrohrtöpfen können gemeinsam oder auch getrennt ausgebaut werden.

In Figur 9 ist die Ausführungsform eines doppelwandigen Spaltrohrtopfes 7" dargestellt, bei der sich zwischen den axialen Rohrwänden 14 und 21 wenigstens eine Signalfolie 12 zur geräteaußenseitigen Anzeige mechanischer Beschädigungen eines dieser axialen Rohrwände befindet. Dabei kann diese Signalfolie 12 wärmeleitend ausgebildet sein, was die Wärmeabfuhr von der äußeren axialen Rohrwand insbesondere zur inneren Rohrwand 14 begünstigt, die vom abgezweigten Teilstrom des Fördermediums zwecks Kühlung intensiv beaufschlagt wird. Der gesamte Spaltrohrtopf 7" gemäß Fig. 9 wird formstabiler und die Pumpe S ist dann zum Einsatz bei entsprechend höheren Förderdrücken gut geeignet, wenn die Signalfolie 12 druckstabil ausgebildet ist. Diese Signalfolie 12 erstreckt sich, ebenso wie ein flüssiges oder gasförmiges Anzeigemedium, auch wenigstens abschnittweise in dem entsprechend doppelwandigen Boden des Spaltrohrtopfes 7, wie er in Fig. 2 oder 3 dargestellt ist.

In Figur 9 erkennt man noch eine elektrische Verbindung 89 zwischen der Signalfolie 12 und einem außenseitigen Anzeigegerät 37b.

Gelegentlich versieht man die Topfbodenplatte 13 mit einem Hilfslager 17 für das innere Drehteil 4. In solchen Fällen ist es zweckmäßig, wenn diese Topfbodenplatte 13 besonders dick und/oder im wesentlichen einstückig wie die Topfbodenplatte 13' in Fig. 3 ausgebildet ist, wo deren Topfbodenaußenwand 34' nur einen radial kurzen Kreisring darstellt und der Spaltrohrtopf 7' besonders biegestabil ist. Zur Formstabilität können auch die Noppen N, die in Verbindung mit Fig. 2 erläutert sind, oder die Signalfolie 12 (vgl. Fig. 9) beitragen.

## Patentansprüche

1. Pumpe (S), deren Antrieb einen inneren Drehteil (4) sowie einen damit magnetisch gekoppelten äußeren Antriebsteil (3) hat, wobei äußeres Antriebs- und inneres Drehteil (4) mittels eines mindestens axial abschnittweise doppelwandigen Spaltrohres hermetisch voneinander getrennt sind und der von den konzentrisch angeordneten Rohrwänden (14, 21) umschlossene Spaltrohr-Wandungsinnenraum (10) ein Anzeigemedium aufweist, wobei bei Beschädigung wenigstens des inneren doppelwandigen Wandungsabschnittes ein Anzeiger (37; 37b) oder dergleichen beaufschlagt wird, wodurch eine Wandundichtigkeit des doppelwandigen Spaltrohrabschnittes geräteaußenseitig anzeigbar ist, **dadurch gekennzeichnet**, daß das innere Drehteil (4) vom äußeren Antriebsteil (3) mittels eines wenigstens einen axialen durchgehenden Wandungsinnenraum (10) aufweisenden Spaltrohrtopfes (7) getrennt ist, wobei der Boden (49) des Spaltrohrtopfes mindestens abschnittweise doppelwandig (13, 34) ausgebildet ist und dessen Topfboden-Wandungsinnenraum (33) mit dem Wandungsinnenraum (10) des axialen Spaltrohres (9) in Anzeigeverbindung steht, und daß in dem axial durchgehenden Wandungsinnenraum (10) des Spaltrohrtopfes (7) und in dem Topfboden-Wandungsinnenraum (33) ein gasförmiges, oder flüssiges Anzeigemedium oder eine Signalfolie als Anzeigemedium vorgesehen ist, wobei der Abstand (d) zwischen den Rohrwänden (14, 21) gerade noch für das gasförmige oder flüssige Anzeigemedium durchlässig ist.

2. Pumpe nach Anspruch 1, dadurch gekennzeichnet, daß die innere axiale Rohrwand (14) des Spaltrohrtopfes mit einer innenliegenden Topfbodenplatte (13) und wenigstens die nächst äußere axiale Rohrwand (21) mit einer Topfbodenaußenwand (34) mechanisch fest und gasdicht, vorzugsweise mittels einer Schweißverbindung verbunden sind.

3. Pumpe nach Anspruch 1 oder 2, dadurch gekennzeichnet, daß ein durch einander gegenüberliegende Rohrwände (14, 21) umgrenzter Wandungsinnenraum (10) abschnittweise Flächenberührung der Innenwände hat.

4. Pumpe nach einem der Ansprüche 1 bis 3, dadurch gekennzeichnet, daß sich in den Wandungsinnenräumen (10, 33) als Anzeigemedium ein Gas befindet, dessen Druck zumindest geringfügig über dem Umgehungsdruck liegt.

5. Pumpe nach einem der Ansprüche 1 bis 4, dadurch gekennzeichnet, daß an der inneren Rohrwand (14) und/oder an der äußeren Rohrwand (21) zur Innenseite der jeweils anderen Rohrwand hin vorstehende Noppen (N) vorgesehen sind.

6. Pumpe nach einem der Ansprüche 1 bis 5, dadurch gekennzeichnet, daß eine axiale Rohrwand (14, 21) ihres Spaltrohrtopfes (7), vorzugsweise die jeweils äußere axiale Rohrwand (21), eine auf die Druckverhältnisse beim Pumpenbetrieb abgestimmte Wandstärke (Wₐ) aufweist und daß gegebenenfalls die benachbarte innere Rohrwand (14) eine wesentlich geringere Wandstärke (Wᵢ) hat und dabei zweckmäßigerweise so elastisch dehnbar ist, daß sie sich bei beschädigter äußerer Rohrwand (21) an diese abstützend anlegen kann.

7. Pumpe nach einem der Ansprüche 1 bis 6, dadurch gekennzeichnet, daß als Anzeigemedium in den Wandungsinnenräumen (10, 33) zwischen den Rohrwänden (14, 21) und den Bodenteilen (13, 33) des Spaltrohrtopfes (7) Förderflüssigkeit vorgesehen ist.

8. Pumpe nach einem der Ansprüche 1 bis 7, dadurch gekennzeichnet, daß die innere und/oder die äußere axiale Rohrwand (14, 21) des Spaltrohrtopfes (7) nebst jeweils zugehörigen Bodenteilen (13, 33) jeweils als separates äußeres und inneres Spaltrohrteil (28, 28a) ausbaubar ist und dabei vorzugsweise pumpenseitig einen radial nach außen gerichteten Dichtflansch aufweist.

9. Pumpe nach einem der Ansprüche 1 bis 8, dadurch gekennzeichnet, daß die Signalfolie (12) wärmeleitend ist.

10. Pumpe nach einem der Ansprüche 1 bis 9, dadurch gekennzeichnet, daß die Signalfolie (12) druckstabil ist.

## Claims

1. A pump (S), the drive of which has an inner driven member (4) and an outer driving member (3) magnetically coupled thereto, whereby outer driving and inner driven member (4) are hermetically separated from one another by means of a can which is double-walled at least axially in areas and the wall space (10) enclosed by the concentrically arranged tubular walls (14, 21) of the can has an indicating medium (11), whereby in case of at least the inner double-walled wall portion sustaining damage an indicator (37; 37b) or the like is acted upon, by means of which any wall leakage of the double-walled can portion can be indicated externally of the appliance, **characterized in that** the inner driven member (4) is separated from the outer driving member (3) by means of a can (7) having at least one axial continuous wall space (10), the base (49) of said can being double-walled (13, 34) at least in areas, and the wall space (33) of the can base communicating with the wall space (10) of the axial can portion (9) in a manner providing indication, and that provided in the axially continuous wall space (10) of the can (7) and in the wall space (33) of the can base there is a gaseous or liquid indicating medium or a signal foil as indicating medium, whereby the spacing (d) between the tubular walls (14, 21) is just permeable for the gaseous or liquid indicating medium.

2. A pump as claimed in claim 1, characterized in that the inner axial tubular wall (14) of the can is connected to an internal base plate (13) of the can and at least the next outer axial tubular wall (21) is connected to an outer wall (34) of the can base, such connection being mechanically stable and gastight and being established preferably by means of a welded joint.

3. A pump as claimed in claim 1 or claim 2, characterized in that a wall space (10) defined by tubular walls (14, 21) facing each other has surface contact of the inside walls in areas.

4. A pump as claimed in any one of claims 1 to 3, characterized in that in the wall spaces (10, 33) there is a gas as the indicating medium, the pressure of said gas being at least slightly above ambient pressure.

5. A pump as claimed in any one of claims 1 to 4, characterized in that the inner tubular wall (14) and/or the outer tubular wall (21) are provided with protuberances (N) projecting toward the inside of in each case the other tubular wall.

6. A pump as claimed in any one of claims 1 to 5, characterized in that one axial tubular wall (14, 21) of the can (7), preferably the outer axial tubular wall (21), has a wall thickness (Wₐ) adapted to the pressure conditions when the pump is in use and that the neighbouring inner tubular wall (14) may have a considerably smaller wall thickness (Wᵢ) and suitably be elastically deformable in such a way as to be capable of leaning supportingly against the outer tubular wall (21) if the latter is damaged.

7. A pump as claimed in any one of claims 1 to 6, characterized in that conveyed fluid is provided as the indicating medium in the wall spaces (10, 33) between the tubular walls (14, 21) and the base portions (13, 33) of the can (7).

8. A pump as claimed in any one of claims 1 to 7, characterized in that the inner and/or the outer axial tubular wall (14, 21) of the can (7) together with the appertaining base portions (13 and 33, respectively) is in each case removable as a separate outer and inner can member (28, 28a) and has preferably in the direction of the pump a radially outwardly directed sealing flange.

9. A pump as claimed in any one of claims 1 to 8, characterized in that the signal foil (12) is heat-conducting.

10. A pump as claimed in any one of claims 1 to 9, characterized in that the signal foil (12) is pressure resistant.

## Revendications

1. Pompe (S), dont l'entraînement possède un rotor intérieur (4) et un élément menant extérieur (3) en liaison magnétique avec lui, l'élément menant extérieur et le rotor intérieur (4), étant isolés hermétiquement l'un de l'autre par l'intermédiaire d'une gaine présentant des doubles parois au moins sur certaines portions axiales, et l'espace intérieur de la paroi de la gaine (10) contenu entre les parois de la gaine (14, 21) disposées concentriquement renfermant un agent indicateur, la détérioration d'au moins la partie intérieure d'une portion de paroi double sollicitant un indicateur (37; 37b) ou similaire, ce qui permet de signaler à l'extérieur de l'appareil un défaut d'étanchéité de la portion de gaine à double paroi, caractérisée en ce que le rotor intérieur (4) est séparé de l'élément menant extérieur (3) au moyen d'une gaine formant une cuve (7) présentant au moins un espace intérieur de paroi (10) axial et continu, le fond (49) de la gaine formant cuve étant conformé au moins par endroits en double paroi (13, 34), et l'espace intérieur de paroi du fond de la cuve (33) étant en liaison fonctionnelle avec l'espace intérieur de paroi (10) de la partie de gaine axiale (9), et en ce qu'il est prévu, comme agent indicateur, un agent indicateur gazeux ou liquide ou une pellicule de signalisation, dans l'espace intérieur de paroi (10) axial et continu de la gaine formant cuve (7) et dans l'espace intérieur de paroi (33) du fond de cuve, l'écart (d) entre les parois de gaine (14, 21) étant tout juste suffisant pour le passage de l'agent indicateur gazeux ou liquide.

2. Pompe selon la revendication 1, caractérisée en ce que la paroi intérieure axiale (14) de la gaine formant cuve est reliée à une plaque de fond de cuve (13) placée à l'intérieur, et en ce qu'au moins la paroi de gaine axiale la plus à l'extérieur (21) est raccordée à une paroi extérieure de fond de cuve (34), et ce de façon mécaniquement fixe et étanche aux gaz, de préférence au moyen d'une soudure.

3. Pompe selon la revendication 1 ou 2, caractérisée en ce qu'un espace intérieur de paroi (10), délimité par des parois de gaine disposées l'une en face de l'autre, est en contact de surface avec les parois intérieures par endroits.

4. Pompe selon l'une des revendications 1 à 3, caractérisée en ce que, dans les espaces intérieurs de paroi (10, 33), se trouve un gaz servant d'agent indicateur, dont la pression est au moins légèrement supérieure à la pression ambiante.

5. Pompe selon l'une des revendications 1 à 4, caractérisée en ce que des protubérances (N) sont prévues sur la paroi intérieure de la gaine (14) et/ou sur la paroi extérieure de la gaine (21), ces protubérances s'étendant en direction de la face intérieure de la paroi respectivement opposée.

6. Pompe selon l'une des revendiations 1 à 5, caractérisée en ce qu'une des parois axiales de gaine (14, 21) de la cuve (7), et de préférence la paroi axiale respectivement à l'extérieur (21), présente une épaisseur de paroi (Wₐ) déterminée en fonction des conditions de pression du mécanisme de la pompe, et en ce que, le cas échéant, la paroi intérieure adjacente (14) a une épaisseur de paroi (Wᵢ) nettement inférieure et en ce qu'elle est, de plus, avantageusement élastiquement extensible de telle sorte que, si la paroi de gaine extérieure (21) était endommagée, elle pourrait venir s'y appliquer et la soutenir.

7. Pompe selon l'une des revendications 1 à 6, caractérisée en ce que le fluide pompé est prévu comme agent indicateur, présent dans les espaces intérieurs de paroi (10, 33) entre les parois de gaine (14, 21) et les éléments du fond (13, 33) de la cuve (7).

8. Pompe selon l'une des revendications 1 à 7, caractérisée en ce que la paroi de gaine axiale intérieure et/ou extérieure (14, 21) de la cuve (7), ainsi que les éléments du fond respectivement associés (13, 33) sont chacun démontables en tant que partie de gaine extérieure et intérieure séparée (28, 28a), et présentent avantageusement, de plus, une bride d'étanchéité du côté de la pompe, dirigée radialement vers l'extérieur.

9. Pompe selon l'une des revendications 1 à 8, caractérisée en ce que la pellicule de signalisation (12) est conductrice de chaleur.

10. Pompe selon l'une des revendications 1 à 9, caractérisée en ce que la pellicule de signalisation (12) est résistante à la pression.
